# FASCICULE DE BREVET EUROPEEN

(11) **EP 3 942 258 B1**
(45) Date de publication et mention de la délivrance du brevet: **30.08.2023**
(21) Numéro de dépôt: 20709611.6
(22) Date de dépôt: 13.03.2020
(51) Int. Cl.: G01D 18/00, G05B 19/418, G05B 19/401

(54) **METHODE DE SYNCHRONISATION TEMPORELLE ENTRE UN MOYEN AUTOMATIQUE DE DEPLACEMENT ET UN MOYEN DE DETECTION SANS CONTACT DISPOSE SUR LEDIT MOYEN AUTOMATIQUE DE DEPLACEMENT**
VERFAHREN ZUR ZEITSYNCHRONISATION ZWISCHEN EINER AUTOMATISCHEN BEWEGUNGSEINRICHTUNG UND EINER AUF DER AUTOMATISCHEN BEWEGUNGSEINRICHTUNG ANGEORDNETEN KONTAKTLOSEN ERFASSUNGSEINRICHTUNG
METHOD FOR TIME SYNCHRONIZATION BETWEEN AN AUTOMATIC MOVING MEANS AND A CONTACTLESS DETECTION MEANS ARRANGED ON SAID AUTOMATIC MOVING MEANS

(30) Priorité: 21.03.2019 FR 1902931
(43) Date de publication de la demande: 26.01.2022
(73) Titulaire: Saint-Gobain Glass France, 92400 Courbevoie (FR)
(72) Inventeur: CARLU, Adrien, 80009 Amiens (FR); MARLIER, Alexandre, 60400 Pontoise Les Noyon (FR)
(74) Mandataire: Saint-Gobain Recherche
(86) Numéro de dépôt international: PCT/EP2020/056933
(87) Numéro de publication internationale: WO 2020/187776

(56) Documents cités:
- DE-A1-102005 016 323
- JP-A- H01 187 403
- US-A1- 2017 276 474
- Anonymous: "How can I synchronize EMG and acceleration data?", Internet, 6 juin 2016 (2016-06-06), XP055612762, Extrait de l'Internet: URL:https://www.researchgate.net/post/How_ can_I_synchronize_EMG_and_acceleration_dat a [extrait le 2019-08-14]

## Description

L'invention concerne une méthode de synchronisation temporelle entre un moyen automatique de déplacement et un moyen de détection sans-contact disposé sur ledit moyen automatique de déplacement pour la mesure d'un paramètre physique le long d'au moins une même trajectoire définie le long des surfaces d'une pluralité de matériaux à évaluer.

Dans le cadre des contrôles de qualité des produits verriers, tels que des feuilles de verre, en sortie de fabrication, il est courant d'employer des moyens de détection intégrés à la ligne de fabrication permettant de mesurer certains paramètres ou certaines propriétés physico-chimiques et/ou optiques sur les produits afin d'isoler et d'éliminer ceux d'entre eux qui ne respectent pas les valeurs cibles pour ces paramètres ou propriétés.

Ces moyens de détection sont le plus souvent sans contact physique avec les produits afin d'éviter toute pollution ou altération de leur surface. Ils peuvent être fixes ou mobiles. Lorsqu'ils sont mobiles, ils peuvent être fixés sur un moyen automatique de déplacement permettant de parcourir certaines trajectoires définies le long des surfaces ou enveloppes des produits.

US 2017 / 276 474 A2 divulgue un procédé de synchronisation dans un système de mesure optique.

Une difficulté dans ce type de système est la synchronisation temporelle entre le déplacement du moyen de déplacement et les signaux émis par le moyen de détection. En effet, chacun des moyens est généralement géré par des modules de contrôle qui leurs sont propres et sont indépendants les uns des autres. Le module de contrôle du moyen automatique de déplacement peut par exemple être géré à l'aide d'un dispositif programmable, tel qu'un complexe informatique, auquel il va transmettre ses coordonnées spatiales en temps réel avec une fréquence de transmission propre. Le même dispositif programmable peut être interfacé avec le module de contrôle du moyen de détection sans contact mais les signaux acquis sont transmis de manière indépendante avec une autre fréquence. Le taux d'échantillonnage des valeurs des paramètres ou des propriétés mesurées par le moyen de détection va varier selon le ratio entre les deux fréquences. Si la fréquence de transmission des coordonnées spatiales est plus faible que la fréquence de détection, le taux d'échantillonnage devient élevé, et il est alors généralement difficile de déterminer quelle est la valeur réelle du paramètre ou de la propriété correspondant à une coordonnée spatiale transmise à un instant donné par le module de contrôle du moyen de déplacement. Inversement, si la fréquence de transmission des coordonnées spatiales est plus élevée, le taux d'échantillonnage est trop faible, et il alors généralement difficile de déterminer quelle est la coordonnée spatiale correspondant à chaque valeur de paramètre ou de propriété mesurée.

Une difficulté supplémentaire apparait lorsque les origines des temps entre le moyen automatique de déplacement et le moyen de détection sans contact sont différentes. L'absence de repère temporel ne permet pas de réaliser la correspondance entre les coordonnées spatiales et les valeurs mesurées des paramètres ou propriété. La mesure est alors imprécise voire inutile car il n'est pas possible de déterminer si le produit en question respecte bien les critères de qualité fixés à un point de mesure donné le long de la surface de son enveloppe.

La présente invention résout ces problèmes. La méthode selon l'invention est particulièrement adaptée pour les systèmes de mesure d'un paramètre physique de long d'une trajectoire sur des surfaces, en particulier incurvées, telles que celles que peuvent présenter des feuilles de verre après leur mise en en forme. Cette méthode peut être notamment utilisée pour un dispositif de mesure d'un paramètre optique permettant la détermination d'écarts géométriques entre une surface d'un matériau de référence et les surfaces d'une pluralité de matériaux à évaluer.
[fig.1] est une représentation schématique d'un exemple de système comprenant un moyen automatique de locomotion et un moyen de détection sans-contact.
[fig.2] est un ordinogramme de la méthode de l'invention.
[fig.3] est un ordinogramme selon un mode de réalisation de la méthode de l'invention.

Dans la suite du texte, il fait référence aux éléments des figures dans leurs différentes vues.

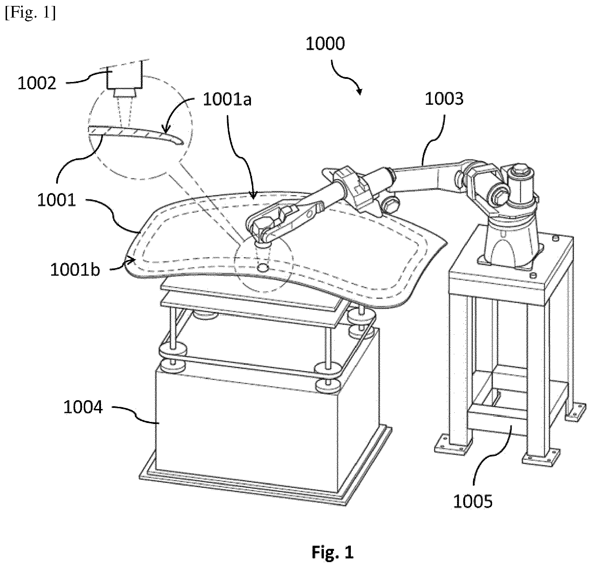

La Figure 1 représente schématiquement un exemple de système comprenant un moyen automatique de déplacement et un moyen de détection sans-contact. Cet exemple est fourni à titre purement illustratif afin de faciliter la compréhension de l'invention décrite ci-après. L'invention peut être adaptée à tout type de système similaire sans que cela nécessite des efforts particuliers pour l'homme du métier, ce qui est également un avantage de l'invention.

Le système représenté en exemple sur la figure 1 est un système automatique de mesure des écarts géométriques de relief ou de courbure entre les surfaces incurvées 1001a d'une pluralité de matériaux 1001 à évaluer et une surface incurvée 1001a d'un matériau 1001 de référence.

Le système comprend un ensemble formé par
- au moins un moyen automatique 1003 de déplacement adapté pour le parcours d'au moins une trajectoire 1001b définie le long des surfaces incurvées 1001a, et
- au moins un moyen 1002 de détection sans contact adapté à la mesure de la hauteur
du relief ou de courbure de surfaces incurvées 1001a, disposé sur le moyen automatique 1003 de déplacement et synchronisé avec les mouvements dudit moyen automatique 1003 de déplacement.

Le système est généralement configuré pour :
- mesurer, en des points de mesure sélectionnés le long d'une trajectoire définie 1001b définie, le profil de hauteur du relief ou de courbure de la surface incurvée 1001a du matériau 1001 de référence, et
- mesurer le profil de hauteur du relief ou de courbure de la surface incurvée 1001a de chaque matériau 1001 à évaluer, aux mêmes points de mesure sélectionnés le long de la même trajectoire 1001b, dans les mêmes conditions de parcours de ladite trajectoire 1001b par le moyen automatique 1003 de déplacement et selon le même angle d'acquisition par le moyen 1002 de détection sans contact au même point de mesure que pour la surface incurvée 1001a du matériau 1001 de référence.

Le moyen 1002 de détection sans contact est disposé ou fixé sur le moyen automatique 2003 de déplacement à l'aide d'un moyen de fixation. Tout moyen de fixation adapté peut être utilisé. De préférence, le moyen de fixation peut posséder une conductivité thermique permettant d'évacuer la chaleur liée à un échauffement du capteur sans contact. Un tel échauffement est en effet susceptible de perturber son fonctionnement, notamment, lorsqu'il s'agit d'un moyen de détection électronique, par l'apparition d'un bruit électronique perturbant son signal.

Le moyen automatique 1003 de déplacement peut être un bras automate articulé doté de six degrés de libertés. L'utilisation d'un tel bras articulé est avantageuse en ce qu'il est suffisamment flexible pour s'adapter à tout type et tout degré de courbure des surfaces incurvées. Le positionnement du moyen de détection sans contact vis-à-vis des surfaces incurvées est facilité.

Le moyen 1002 de détection sans contact peut être un capteur confocal chromatique.

Ainsi qu'il a été expliqué en introduction, une première difficulté rencontrée avec le type de système illustré en exemple sur la figure 1 est la synchronisation temporelle entre le déplacement du moyen de locomotion et les signaux émis par le moyen de détection. Une deuxième difficulté peut être l'absence de repère temporel qui ne permet pas de réaliser la correspondance entre les coordonnées spatiales et les valeurs mesurées des paramètres ou propriété.

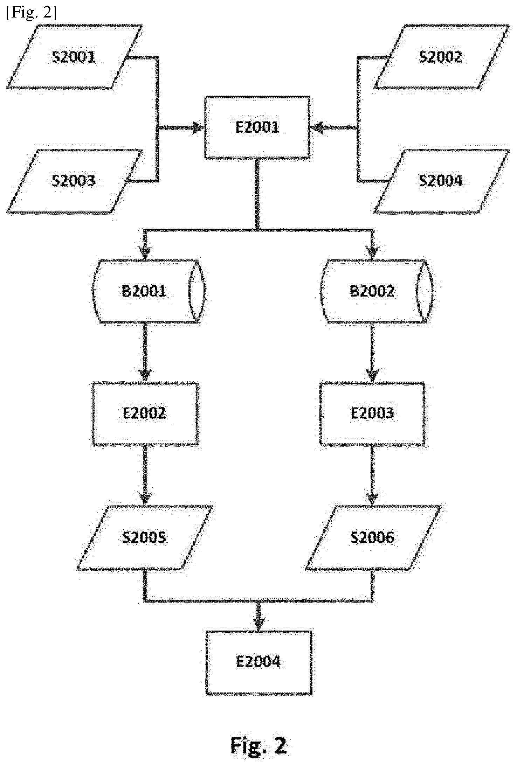

L'invention est illustrée par l'ordinogramme de la figure 2.

L'invention concerne une méthode de synchronisation temporelle entre un moyen automatique 1003 de déplacement et un moyen 1002 de détection sans-contact disposé sur ledit moyen automatique 1003 de déplacement pour la mesure d'un paramètre physique le long d'au moins une même trajectoire définie 1001b sur des surfaces 1001a d'une pluralité de matériaux 1001 à évaluer, les coordonnées spatiales S2001 du moyen automatique 1003 de déplacement et les signaux S2002 acquis par le moyen 1002 de détection sans contact étant enregistrés E2001 de manière continu par un moyen d'enregistrement dans leurs échelles de temps respectives lorsque le moyen automatique 1003 de déplacement se déplace, ladite méthode comprenant les étapes suivantes :
(a) l'enregistrement E2001, par ledit moyen d'enregistrement, du signal d'au moins une position spatiale S2003 de référence préalablement définie le long de ladite trajectoire 1001b, et d'un signal caractéristique S2004 apte à être détecté par le moyen 1002 de détection sans-contact, ledit signal étant associé à la dite position spatiale S2003 de référence ;
(b) la recherche E2002, mise en oeuvre par ordinateur, dans l'ensemble B2001 des signaux acquis en fonction du temps par le moyen 1002 de détection sans-contact, du moment temporel S2005 correspondant à la détection du signal caractéristique S2004 associé à la position spatiale S2003 de référence ;
(c) la recherche E2003, mise en oeuvre par ordinateur, dans l'ensemble B2002 des positions spatiales du moyen automatique de locomotion enregistrées en fonction du temps, du moment temporel S2006 correspondant à la position spatiale S2003 de référence ;
(d) la translation E2004, mise en oeuvre par ordinateur, des échelles des temps respectives du moyen automatique 1003 de déplacement et du moyen 1002 de détection sans contact de manière à ce que les moments temporaux S2003 et S2004 obtenus aux étapes (b) et (c) coïncident entre eux.

La présente méthode a ainsi pour résultat d'obtenir la synchronisation temporelle des coordonnées spatiales du moyen automatique de déplacement et des signaux acquis par le moyen de détection.

Il est possible, et généralement courant, lors de l'utilisation d'un système tel que celui décrit précédemment et illustré sur la figure 1, qu'au cours d'un temps plus ou moins long, une dérive apparaisse ayant pour conséquence que les coordonnées spatiales du moyen automatique de déplacement et les signaux acquis par le moyen de détection ne soient plus synchronisés avec une précision suffisante.

Pour pallier cet inconvénient, il est possible de réitérer l'exécution de la méthode décrite autant de fois que nécessaire pendant l'utilisation dudit système de manière à supprimer, ou du moins minimiser les effets de la dérive. Il convient alors d'enregistrer E2001, à chaque itération d'exécution de la méthode, la position spatiale S2003 de référence préalablement définie le long de ladite trajectoire 1001b, et le signal caractéristique S2004 apte à être détecté par le moyen 1002 de détection sans-contact. Il est toutefois possible, à chaque itération d'exécution de la méthode, d'enregistrer une autre position spatiale de référence préalablement définie le long de ladite trajectoire 1001b, et un autre signal caractéristique apte à être détecté par le moyen 1002 de détection sans-contact, ledit autre signal étant associé à ladite position spatiale de référence. Ces deux alternatives peuvent être combinées.

Dans certains cas, notamment lorsque les cadences de production et/ou de contrôle de qualité sont importantes, la répétition des étapes (a) à (c) à chaque itération est susceptible de constituer une perte de temps. Il peut alors être avantageux que la méthode comprenne une étape supplémentaire permettant la resynchronisation temporelle des coordonnées spatiales du moyen automatique 1003 de déplacement et des signaux acquis par le moyen 1002 de détection sans requérir de manière systématique, à chaque itération d'exécution de la méthode, à l'étape (a) d'enregistrement et des étapes (b) et (c) subséquentes.

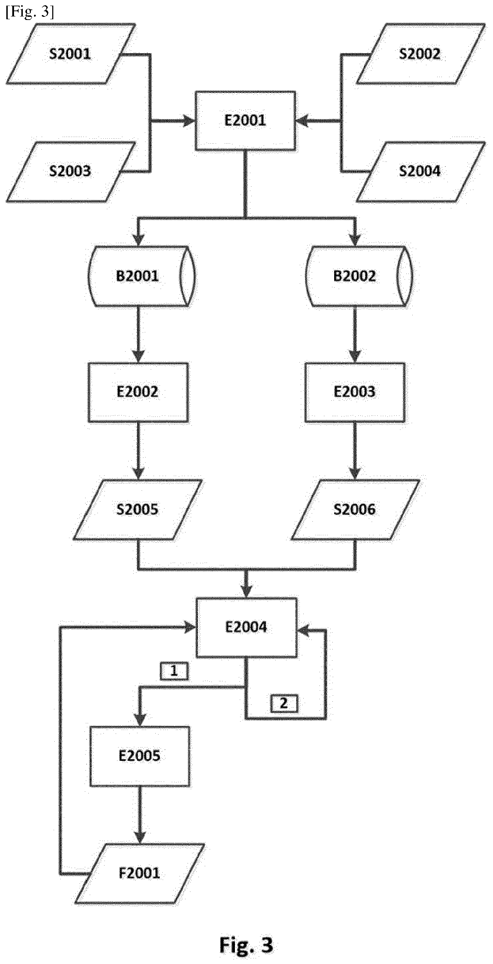

Une exemple d'une telle étape supplémentaire est illustré par le mode de réalisation représenté par l'ordinogramme de la figure 3. Dans ce mode de réalisation, la méthode comprend en outre, après l'étape (d), une étape E2005 (e) de calcul, mise en oeuvre par ordinateur, d'une fonction F2001 de corrélation statistique entre les échelles des temps respectives du moyen automatique 1003 de déplacement et du moyen 1003 de détection sans contact, et telle que la translation E2004 de l'étape (d) est ultérieurement réalisée au moyen de cette fonction F2001 de corrélation au lieu des moments temporaux obtenus aux étapes (b) et (c).

Ainsi, après une première exécution (1) de la méthode, à chaque itération ultérieure (2) d'exécution, au lieu de répéter les étapes E2001-E2003 (a) à (c), l'étape E2004 (d) est exécutée à l'aide de la fonction F2001 de corrélation obtenue à l'étape E2005 (e). Ce mode de réalisation permet de gagner du temps puisque seule l'étape E2004 (d) est exécutée ultérieurement.

Lors de l'utilisation d'un système tel que celui décrit précédemment et illustré sur la figure 1, il est possible qu'une dérive affecte les modules de contrôle respectifs du moyen automatique de déplacement et du moyen de détection sans-contact. Dans ce cas, la fonction de corrélation pourrait ne plus être suffisante pour permettre une resynchronisation temporelle assez précise des coordonnées spatiales du moyen automatique de déplacement et des signaux acquis par le moyen de détection. Il convient alors d'exécuter à nouveau l'intégralité des étapes de la méthode selon le deuxième mode de réalisation décrit. Cette exécution peut en particulier être réalisée à des moments particuliers, par exemple, à des intervalles de temps réguliers, ou encore lorsqu'une dérive trop importante est constatée.

La fonction de corrélation peut être un facteur d'échelle, une relation linéaire, ou encore un modèle d'apprentissage statistique.

Selon d'autres modes de réalisation de la méthode de l'invention, la position spatiale peut correspondre à un marqueur disposé en un même endroit des surfaces à évaluer et le signal caractéristique peut être un signal dudit marqueur. L'avantage d'utiliser un marqueur est que le marqueur peut être choisi de sorte le signal caractéristique soit différent de ceux provenant des surfaces 1001b des matériaux à évaluer. Cela permet une recherche E2003 précise et rapide dudit signal parmi l'ensemble B2001 des signaux acquis en fonction du temps par le moyen 1002 de détection sans-contact. A titre d'exemple, le marqueur peut être un réflecteur ou un émetteur de signaux électromagnétiques

Pour certains matériaux, il se peut que l'utilisation d'un marqueur ne soit pas adaptée notamment en raison d'une pollution potentielle non acceptable de leurs surfaces par les éléments du marqueur, ou de la forme de leur surface qui ne permet pas d'y placer le marqueur de manière appropriée pour sa détection. La position de référence peut alors avantageusement correspondre à un même point situé sur le bord des surfaces et le signal caractéristique peut être une absence de signal.

Il est possible de combiner ce dernier mode de réalisation avec l'utilisation complémentaire d'un marqueur.

L'invention a également pour objet un système de mesure comprenant un moyen automatique de déplacement, un moyen de détection sans contact disposé sur le moyen automatique de déplacement, un moyen d'enregistrement des coordonnées spatiales du moyen automatique de déplacement et des signaux acquis par le moyen de détection, et un moyen de traitement de données adaptés à l'exécution des étapes d'une méthode de synchronisation temporelle telle que décrite précédemment.

Un exemple de système de mesure peut être celui décrit précédemment et illustré sur la figure 1, qui comprendrait en outre un moyen d'enregistrement des coordonnées spatiales du moyen automatique de déplacement et des signaux acquis par le moyen de détection et un moyen de traitement de données adaptés à l'exécution des étapes d'une méthode de synchronisation temporelle telle que décrite précédement. Un exemple de moyen de traitement de données adaptés peut être un ordinateur ou microcontrôleur. Le moyen d'enregistrement peut également être un ordinateur ou un microcontrôleur disposant d'interfaces d'enregistrement de signaux.

Le moyen de détection peut être avantageusement un moyen de détection optique, en particulier un capteur confocal chromatique.

La méthode selon l'invention est particulièrement adaptée pour les systèmes de mesure d'un paramètre optique de long d'une trajectoire sur des surfaces, en particulier incurvées, telles que celles que peuvent présenter des feuilles de verre.

L'invention se rapporte également à un programme informatique comprenant des instructions qui permet au système précité d'exécuter les étapes d'une méthode de synchronisation temporelle telle que décrite précédemment.

Tout type de langage de programmation compilé vers une forme binaire ou directement interprété peut être utilisé pour implémenter les étapes de la méthode selon l'invention par une suite d'instructions arithmétiques ou logiques exécutables par un ordinateur ou tout système de traitement de l'information programmable. Le programme informatique peut faire partie d'un logiciel, c'est-à-dire d'un ensemble d'instructions exécutables et/ou d'un ou plusieurs jeux de données ou de bases de données.

Le programme informatique peut être enregistré sur un support de stockage déchiffrable par ordinateur. Ce support de stockage est de préférence une mémoire informatique non volatile ou rémanente, par exemple une mémoire de masse magnétique ou à semi-conducteur (solid state drive, flash memory). Elle peut être amovible ou intégrée à l'ordinateur qui en déchiffre le contenu et en exécute les instructions.

Le support de stockage peut être intégré à un ordinateur distant, appelé « serveur », différent de celui qui exécute les instructions, appelé le « client ». Pour exécuter les instructions contenues dans le support de stockage, l'ordinateur « client » accède à l'espace mémoire de l'ordinateur « serveur » dans laquelle est enregistré le programme informatique à l'aide d'un moyen de télécommunication physique et/ou aérien approprié. L'ordinateur « serveur » peut aussi déchiffrer le support de stockage sur lequel est stocké le programme d'ordinateur et communiquer les instructions sous forme binaire à l'ordinateur « client » par tout moyen de télécommunication.

Il peut être avantageux que le support de stockage soit un support amovible ou soit accessible à distance par un moyen de télécommunication de manière à faciliter la diffusion de l'invention dans les lieux où elle est susceptible d'être utilisée.

## Revendications

1. Méthode de synchronisation temporelle entre un moyen automatique de déplacement (1003) et un moyen de détection sans-contact (1002) disposé sur ledit moyen automatique de déplacement pour la mesure d'un paramètre physique le long d'au moins une même trajectoire (1001b) définie sur des surfaces d'une pluralité de matériaux (1001) à évaluer, les coordonnées spatiales du moyen automatique de déplacement et les signaux acquis par le moyen de détection sans-contact étant enregistrés de manière continu par un moyen d'enregistrement dans leurs échelles de temps respectives lorsque le moyen automatique de déplacement se déplace, ladite méthode comprenant les étapes suivantes :
(a) l'enregistrement, par ledit moyen d'enregistrement, d'au moins une position spatiale de référence préalablement définie le long de ladite trajectoire, et d'un signal caractéristique apte à être détecté par le moyen de détection sans-contact, ledit signal étant associé à la dite position spatiale de référence,
(b) la recherche dans l'ensemble des signaux acquis en fonction du temps par le moyen de détection sans-contact, du moment temporel correspondant à la détection du signal caractéristique associé à la position de référence ;
(c) la recherche dans l'ensemble des positions spatiales du moyen automatique de déplacement enregistrées en fonction du temps, le moment temporel correspondant à la position spatiale de référence ;
(d) la translation des échelles des temps respectives du moyen automatique de déplacement et du moyen de détection sans contact afin que les moments temporaux obtenus aux étapes (b) et (c) coïncident entre eux.

2. Méthode de synchronisation temporelle selon la revendication 1, telle qu'elle comprend en outre, après l'étape (d), une étape (e) de calcul d'une fonction de corrélation statistique entre les échelles des temps respectives du moyen automatique de déplacement et du moyen de détection sans contact, et telle que la translation de l'étape (d) est ultérieurement réalisée au moyen de cette fonction de corrélation au lieu des moments temporaux obtenus aux étapes (b) et (c).

3. Méthode de synchronisation temporelle selon la revendication 2, telle que la fonction de corrélation statistique est un facteur d'échelle.

4. Méthode de synchronisation temporelle selon l'une des revendications 1 à 3, telle que la position de référence correspond à un même point situé sur le bord des surfaces et le signal caractéristique est une absence de signal.

5. Méthode de synchronisation temporelle selon l'une des revendications 1 à 3, telle que la position spatiale de référence correspond à un marqueur disposé en un même endroit des surfaces à évaluer et le signal caractéristique est un signal dudit marqueur.

6. Méthode de synchronisation temporelle selon la revendication 5, telle que le marqueur est un réflecteur ou un émetteur de signaux électromagnétiques.

7. Système de mesure comprenant un moyen automatique de déplacement (1003), un moyen de détection sans contact (1002) disposé sur le moyen automatique de déplacement, un moyen d'enregistrement des coordonnées spatiales du moyen automatique de déplacement et des signaux acquis par le moyen de détection, et un moyen de traitement de données adaptés à l'exécution des étapes d'une méthode de synchronisation temporelle selon l'une des revendications 1 à 6.

8. Système de mesure selon la revendication 7, telle que le moyen de détection sans contact est un moyen de détection optique.

9. Programme informatique comprenant des instructions qui permettent au système selon l'une des revendications 7 et 8 d'exécuter les étapes d'une méthode de synchronisation temporelle selon l'une quelconque des revendications 1 à 6, lorsque ledit programme est exécuté sur un ordinateur.

10. Support déchiffrable par ordinateur sur lequel est enregistré un programme informatique comprenant des instructions de code de programme qui permettent au système selon l'une des revendications 7 et 8 d'exécuter les étapes d'une méthode de synchronisation temporelle selon l'une quelconque des revendications 1 à 6.

## Patentansprüche

1. Verfahren zur Zeitsynchronisation zwischen einer automatischen Bewegungseinrichtung (1003) und einer auf der automatischen Bewegungseinrichtung angeordneten kontaktlosen Erfassungseinrichtung (1002), zum Messen eines physikalischen Parameters entlang mindestens einer gleichen Trajektorie (1001b), die auf den Oberflächen einer Vielzahl von Materialien (1001) definiert ist, die zu bewerten sind, wobei die räumlichen Koordinaten der automatischen Bewegungseinrichtung und die durch die kontaktlose Erfassungseinrichtung erfassten Signale kontinuierlich durch eine Aufzeichnungseinrichtung in ihren jeweiligen Zeitskalen aufgezeichnet werden, wenn sich die automatische Bewegungseinrichtung bewegt, wobei das Verfahren die folgenden Schritte umfasst:
(a) Aufzeichnen, durch die Aufzeichnungseinrichtung, von mindestens einer zuvor definierten räumlichen Referenzposition entlang der Trajektorie und eines charakteristischen Signals, das geeignet ist, durch die kontaktlose Erfassungseinrichtung erfasst zu werden, wobei das Signal der räumlichen Referenzposition zugeordnet ist,
(b) Suchen, in der Gesamtheit der durch die kontaktlose Erfassungseinrichtung in Abhängigkeit von der Zeit erfassten Signale, des Zeitpunkts, welcher der Erfassung des charakteristischen Signals, das der Referenzposition zugeordnet ist, entspricht;
(c) Suchen, in der Gesamtheit der durch die automatische Bewegungseinrichtung in Abhängigkeit von der Zeit aufgezeichneten räumlichen Positionen, des Zeitpunkts, welcher der räumlichen Referenzposition entspricht;
(d) Verschieben der jeweiligen Zeitskalen der automatischen Bewegungseinrichtung und der kontaktlosen Erfassungseinrichtung, damit die Zeitpunkte, die bei den Schritten (b) und (c) erhalten werden, miteinander übereinstimmen.

2. Verfahren zur Zeitsynchronisation nach Anspruch 1, wobei es ferner nach Schritt (d) einen Schritt (e) des Berechnens einer statistischen Korrelationsfunktion zwischen den jeweiligen Zeitskalen der automatischen Bewegungseinrichtung und der kontaktlosen Erfassungseinrichtung umfasst, und wobei die Verschiebung von Schritt (d) anschließend mittels dieser Korrelationsfunktion anstelle von Zeitpunkten, die in den Schritten (b) und (c) erhalten werden, durchgeführt wird.

3. Verfahren zur Zeitsynchronisation nach Anspruch 2, wobei die statistische Korrelationsfunktion ein Skalierungsfaktor ist.

4. Verfahren zur Zeitsynchronisation nach einem der Ansprüche 1 bis 3, wobei die Referenzposition einem gleichen Punkt auf dem Rand der Oberflächen entspricht und das charakteristische Signal ein Signalausfall ist.

5. Verfahren zur Zeitsynchronisation nach einem der Ansprüche 1 bis 3, wobei die räumliche Referenzposition einer Markierung entspricht, die an einer gleichen Stelle der zu bewertenden Oberflächen angeordnet ist, und das charakteristische Signal ein Signal der Markierung ist.

6. Verfahren zur Zeitsynchronisation nach Anspruch 5, wobei die Markierung ein Reflektor oder ein Sender für elektromagnetische Signale ist.

7. Messsystem, umfassend eine automatische Bewegungseinrichtung (1003), eine kontaktlose Erfassungseinrichtung (1002), die auf der automatischen Bewegungseinrichtung angeordnet ist, eine Aufzeichnungseinrichtung von räumlichen Koordinaten der automatischen Bewegungseinrichtung und von Signalen, die durch die Erfassungseinrichtung erfasst werden, und eine Datenverarbeitungseinrichtung, die geeignet ist, die Schritte eines Verfahrens zur Zeitsynchronisation nach einem der Ansprüche 1 bis 6 auszuführen.

8. Messsystem nach Anspruch 7, wobei die kontaktlose Erfassungseinrichtung eine optische Erfassungseinrichtung ist.

9. Computerprogramm, umfassend Anweisungen, die es dem System nach einem der Ansprüche 7 und 8 ermöglichen, die Schritte eines Verfahrens zur Zeitsynchronisation nach irgendeinem der Ansprüche 1 bis 6 durchzuführen, wenn das Programm auf einem Computer ausgeführt wird.

10. Computerlesbares Medium, auf dem ein Computerprogramm aufgezeichnet ist, das Programmcodeanweisungen umfasst, die es dem System nach einem der Ansprüche 7 und 8 ermöglichen, die Schritte eines Verfahrens zur Zeitsynchronisation nach irgendeinem der Ansprüche 1 bis 6 durchzuführen.

## Claims

1. A method for temporal synchronization between an automatic movement means (1003) and a contactless detection means (1002) arranged on said automatic movement means in order to measure a physical parameter along at least one and the same defined trajectory (1001b) on surfaces of a plurality of materials (1001) to be evaluated, the spatial coordinates of the automatic movement means and the signals acquired by the contactless detection means being recorded continuously by a recording means in their respective time scales when the automatic movement means moves, said method comprising the following steps:
(a) recording, by way of said recording means, of at least one previously defined reference spatial position along said trajectory, and of a characteristic signal able to be detected by the contactless detection means, said signal being associated with said reference spatial position,
(b) searching, in the set of signals acquired as a function of time by the contactless detection means, for the moment in time corresponding to the detection of the characteristic signal associated with the reference position;
(c) searching, in the set of spatial positions of the automatic movement means, recorded as a function of time, for the moment in time corresponding to the reference spatial position;
(d) translation of the respective time scales of the automatic movement means and of the contactless detection means, such that the moments in time obtained in steps (b) and (c) coincide with one another.

2. The temporal synchronization method as claimed in claim 1, such that it furthermore comprises, after step (d), a step (e) of calculation of a statistical correlation function between the respective time scales of the automatic movement means and of the contactless detection means, and such that the translation in step (d) is subsequently performed by way of this correlation function rather than the moments in time obtained in steps (b) and (c).

3. The temporal synchronization method as claimed in claim 2, such that the statistical correlation function is a scale factor.

4. The temporal synchronization method as claimed in one of claims 1 to 3, such that the reference position corresponds to one and the same point situated on the edge of the surfaces and the characteristic signal is the absence of a signal.

5. The temporal synchronization method as claimed in one of claims 1 to 3, such that the reference spatial position corresponds to a marker arranged at one and the same location on the surfaces to be evaluated, and the characteristic signal is a signal from said marker.

6. The temporal synchronization method as claimed in claim 5, such that the marker is a reflector or an electromagnetic signal emitter.

7. A measurement system comprising an automatic movement means (1003), a contactless detection means (1002) arranged on the automatic movement means, a means for recording the spatial coordinates of the automatic movement means and the signals acquired by the detection means, and a data processing means, all of said means being designed to execute the steps of a temporal synchronization method as claimed in one of claims 1 to 6.

8. The measurement system as claimed in claim 7, such that the contactless detection means is an optical detection means.

9. A computer program comprising instructions that allow the system as claimed in one of claims 7 to 8 to execute the steps of a temporal synchronization method as claimed in any one of claims 1 to 6 when said program is executed on a computer.

10. A computer-decipherable medium on which there is recorded a computer program comprising program code instructions that allow the system as claimed in one of claims 7 to 8 to execute the steps of a temporal synchronization method as claimed in any one of claims 1 to 6.
